# EUROPÄISCHE PATENTSCHRIFT

(11) **EP 3 067 227 B1**
(45) Veröffentlichungstag und Bekanntmachung des Hinweises auf die Patenterteilung: **13.02.2019**
(21) Anmeldenummer: 16158960.1
(22) Anmeldetag: 07.03.2016
(51) Int. Cl.: B60H 1/00, G06F 3/0488, G06F 3/0484

(54) **FORTBEWEGUNGSMITTEL, ANWENDERSCHNITTSTELLE UND VERFAHREN ZUR BEDIENUNG EINER HEIZKLIMAANLAGE EINES FORTBEWEGUNGSMITTELS**
MEANS OF LOCOMOTION, USER INTERFACE AND METHOD FOR OPERATING A HEATING AIR CONDITIONER OF A MEANS OF LOCOMOTION
MOYEN DE DEPLACEMENT, INTERFACE UTILISATEUR ET PROCEDE D'UTILISATION D'UNE CLIMATISATION D'UN MOYEN DE DEPLACEMENT

(30) Priorität: 11.03.2015 DE 102015204380
(43) Veröffentlichungstag der Anmeldung: 14.09.2016
(73) Patentinhaber: VOLKSWAGEN AKTIENGESELLSCHAFT, 38440 Wolfsburg (DE)
(72) Erfinder: Gröning, Anja, 16321 Bernau (DE); Perkuhn, Janine, 10437 Berlin (DE); Leineweber, Stefan, 14057 Berlin (DE); Han, Yaoping, 13351 Berlin (DE)

(56) Entgegenhaltungen:
- DE-A1-102012 016 109
- DE-A1-102012 021 519
- DE-A1-102013 009 603
- DE-U1-202006 003 543

## Beschreibung

### Stand der Technik

Die vorliegende Erfindung betrifft eine Anwenderschnittstelle sowie ein Verfahren zur Bedienung einer Heizklimaanlage eines Fortbewegungsmittels. Insbesondere betrifft die vorliegende Erfindung eine intuitive Anpassung von Ausrichtung und Luftstromstärke/Lüfterstufe mittels einer grafischen Anwenderschnittstelle.

Im Stand der Technik werden Funktionen von Heizklimaanlagen in Fortbewegungsmitteln häufig durch Schalter, Schiebe- und Drehregler eingestellt. Durch diese Bedienelemente werden Parameter der Luftverteilung, der Lüfterstufe, sowie der Lufttemperatur vom Fahrer auf gewünschte Sollwerte eingestellt. Dadurch ergeben sich für ein Bedienteil einer Heizklimaanlage entsprechend viele Bedienelemente, die keinen intuitiven Bezug zum Fahrzeuginsassen wiedergeben.

WO 2013/005093 A1 offenbart eine Anwenderschnittstelle für eine Heiz-/Klimafunktion, bei welcher auf einem Bildschirm ein Lüftersymbol dargestellt wird, dessen Darstellungsgröße stufenlos mit einer eingestellten Lüfterstärke korreliert. In einem Ausführungsbeispiel wird ein Temperaturwert auf dem Lüftersymbol dargestellt, der eine Solltemperatur repräsentiert. In einem weiteren Ausführungsbeispiel wird vorgeschlagen, die Lüfterstärke durch eine animierte Rotation des Lüftersymbols mit einer zugeordneten Geschwindigkeit zu veranschaulichen.

DE 10 2012 016 109 A1 offenbart eine Bedienvorrichtung und ein zugehöriges Verfahren zum Einstellen einer Klimatisierungsvorrichtung eines Fahrzeugs, wobei eine Steuervorrichtung so ausgebildet ist, dass solche Graphikdaten erzeugt werden, dass auf der Anzeigefläche eine graphische Darstellung des Innenraums des Fahrzeugs wiedergegeben wird. Dabei werden innerhalb der graphischen Darstellung des Innenraums des Fahrzeugs Schaltsymbole angezeigt, welche die Einströmrichtung und/oder die Einströmrate und/oder die Einströmtemperatur der durch die Belüftungselemente in den Innenraum einströmenden Luft darstellen. Ferner weist die Eingabevorrichtung eine Erfassungseinrichtung auf, mittels welcher Eingaben eines Nutzers erfasst werden, die in Bezug auf die Schaltsymbole auf oder vor der Anzeigefläche ausgeführt werden.

Zur intuitiven Auswahl einer Luftverteilung einer Heiz-/Klimaanlage sind bislang keine Ansätze bekannt, welche die technischen Möglichkeiten zufriedenstellend ausschöpfen. Überdies müssen Ausrichtung und Verteilung eines Luftstromes einer Heizklimaanlage im Stand der Technik häufig manuell durch Ausrichten entsprechender Luftleitschaufeln (Statoren) angepasst werden. Es ist daher eine Aufgabe der vorliegenden Erfindung, den vorstehend identifizierten Bedarf zu stillen.

### Offenbarung der Erfindung

Die vorstehend identifizierte Aufgabe wird erfindungsgemäß durch ein Verfahren zur Bedienung einer Heizklimaanlage eines Fortbewegungsmittels gelöst. Das Fortbewegungsmittel kann beispielsweise ein PKW, ein Transporter, ein LKW, ein Motorrad, ein Luft- und/oder Wasserfahrzeug sein. Die Heizklimaanlage kann zur Erhöhung der Temperatur innerhalb des Fortbewegungsmittels eingerichtet sein ("Heizfunktion"). Alternativ oder zusätzlich kann die Heizklimaanlage zur Verringerung der Temperatur innerhalb des Fortbewegungsmittels eingerichtet sein ("Klimaanlagenfunktion"). Insbesondere ist die Heizklimaanlage eingerichtet, einen vortemperierten Luftstrom in die Fahrgastzelle des Fortbewegungsmittels zu leiten. In einem ersten Schritt werden Bereichsgrenzen eines aktuell von der Heizklimaanlage ausgegebenen Luftstroms auf einer berührungsempfindlichen Anzeigeeinheit einer Anwenderschnittstelle dargestellt. Dabei repräsentieren die Bereichsgrenzen eine optische Orientierung bezüglich derjenigen Bereiche, in welchen von der Heizklimaanlage ausgegebene Luft im Wesentlichen gerichtet ausgegeben wird, gegenüber solchen Bereichen, in welchen die ausgeströmte Luft lediglich indirekt beziehungsweise nach erfolgter Umlenkung innerhalb des Innenraumes des Fahrzeugs gelangt. Die berührungsempfindliche Anzeigeeinheit kann beispielsweise als Touchscreen ausgestaltet sein, welcher fest in das Armaturenbrett des Fortbewegungsmittels eingebracht ist. Alternativ oder zusätzlich kann die berührungsempfindliche Anzeigeeinheit als Bestandteil eines tragbaren Anwenderendgerätes zur Drahtloskommunikation vorgesehen sein. Zur Anpassung des Luftstroms wird eine Anwendereingabe an einer ersten Position auf der Anzeigeeinheit empfangen und im Ansprechen darauf eine dargestellte Bereichsgrenze in Abhängigkeit der Position angepasst. Mit anderen Worten berührt der Anwender die Anzeigeeinheit an der ersten Position, welche von nun an eine veränderte Position der Darstellung der Bereichsgrenze bedingt. Insbesondere kann eine der ersten Position nächstliegende Bereichsgrenze auf die erste Position verschoben werden. Auf diese Weise kann der Anwender intuitiv Einfluss darauf nehmen, welche Teile seines Körpers direkt, und welche lediglich indirekt von der Heizklimaanlage angeströmt werden sollen.

Die Unteransprüche zeigen bevorzugte Weiterbildungen der Erfindung.

Entsprechend der optischen Darstellung der Bereichsgrenze kann bevorzugt auch ein Steuersignal ausgegeben werden, im Ansprechen auf welches die Führung des Luftstroms in entsprechender Weise angepasst wird. Beispielsweise können Ventile, Klappen, Diffusoren, etc. der Heizklimaanlage motorisch beeinflusst werden, um den Luftstrom innerhalb der neuen Bereichsgrenzen zu führen und außerhalb der neuen Bereichsgrenzen zu unterdrücken.

Zur Verbesserung der intuitiven Bedienbarkeit kann ein erster Anfasser an einer dargestellten Bereichsgrenze angezeigt werden, welcher die Möglichkeit einer berührenden Interaktion mit der Bereichsgrenze verdeutlicht. Der Anfasser kann beispielsweise als Kreisring, als Doppelpfeil, als optisch strukturierte Fläche o.ä. ausgestaltet sein. Alternative Möglichkeiten der Darstellung des Anfassers werden durch aktuelle Betriebssysteme von Personalcomputern, Tablets, Smartphones etc. zur Anpassung und Verschiebung von Elementen und Fenstern vorgeschlagen und können für die Zwecke der vorliegenden Erfindung in entsprechender Weise verwendet und adaptiert werden. Zusätzlich kann eine Anwendereingabe an einer zweiten Position auf der Anzeigeeinheit empfangen werden und in Abhängigkeit der zweiten Position eine Länge eines auf der Anzeigeeinheit dargestellten Luftstroms verändert werden. Der Luftstrom kann beispielsweise als fächer- oder trichterartig von einem Luftauslass ausgehendes Feld dargestellt werden. Von dem versinnbildlichten Luftauslass oder Lüfterrad entlegene Bereiche des dargestellten Luftstroms können einen entsprechenden zweiten Anfasser an der zweiten Position aufweisen, um den Anwender auf die Möglichkeit einer berührenden Interaktion mit der Darstellung zur Anpassung der Lüfterstufe hinzuweisen.

Die Darstellung der Bereichsgrenzen des ausgegebenen Luftstromes kann durch die Darstellung des Luftstromes selbst auf der Anzeigeeinheit erfolgen. Hierbei kann insbesondere eine Position innerhalb des Luftstromes eine Farbe repräsentierend eine Solltemperatur für die Heizklimaanlage aufweisen. Beispielsweise kann im Fall einer eingeschalteten Heizfunktion die Luftstromfarbe rot sein. Alternativ oder zusätzlich kann eine Position außerhalb des Luftstromes eine Farbe repräsentierend eine Ist-Temperatur für die Heizklimaanlage aufweisen beziehungsweise enthalten. Im Falle einer Heizfunktion kann die Position außerhalb des Luftstroms beispielsweise blau sein, um einen aufzuheizenden, kalten Innenraum zu veranschaulichen. Entsprechende Randbereiche und insbesondere vom gegebenenfalls versinnbildlichen Luftausströmer weiter entfernte Bereiche können Mischfarben der vorgenannten Farbkombination aufweisen, um gemäßigte Temperaturen zu veranschaulichen. Für den Fall eines Betriebes einer Klimaanlage kann die vorstehend beispielhaft genannte Farbkombination entsprechend umgekehrt werden.

Um eine besonders komfortable und ergonomische Möglichkeit einer Anpassung einer Heizklimaanlage eines Fortbewegungsmittels zu ermöglichen, kann die Anzeigeeinheit Bestandteil einer Anwenderschnittstelle eines tragbaren Anwenderendgerätes zur Mobilkommunikation sein. Hierzu werden die essenziellen Schritte des erfindungsgemäßen Verfahrens auf dem Anwenderendgerät ausgeführt und die angepasst dargestellte Bereichsgrenze durch ein Steuersignal (z. B. drahtlos übertragen) repräsentiert, welches vom Fortbewegungsmittel empfangen und anschließend zur motorischen Anpassung einer Führung eines Luftstroms der Heizklimaanlage ausgewertet wird. Selbstverständlich kann optional vorgesehen sein, dass der Anwender seine Sitzposition definiert und sich die Anpassung der Bereichsgrenzen des Luftstroms lediglich auf die gewählte Sitzposition beziehen.

Gemäß einem zweiten Aspekt der vorliegenden Erfindung wird eine Anwenderschnittstelle zur Bedienung einer Funktion einer Heizklimaanlage eines Fortbewegungsmittels vorgeschlagen. Die Anwenderschnittstelle kann Komponenten aufweisen, welche anteilig oder vollständig in ein Fortbewegungsmittel integriert und (insbesondere dauerhaft) mit diesem verbunden werden können. Die Anwenderschnittstelle umfasst eine berührungsempfindliche Anzeigeeinheit und eine Auswerteeinheit. Die vorgenannten Komponenten ermöglichen eine Ausführung eines erfindungsgemäßen Verfahrens. Hierzu ist die berührungsempfindliche Anzeigeeinheit eingerichtet, Bereichsgrenzen eines aktuell von der Heizklimaanlage ausgegebenen Luftstromes darzustellen, eine Anwendereingabe an einer ersten Position auf der Anzeigeeinheit zu empfangen und eine dargestellte Bereichsgrenze in Abhängigkeit der ersten Position anzupassen. Bevorzugt wird dabei die neue Bereichsgrenze durch die erste Position gelegt.

Gemäß einem dritten Aspekt der vorliegenden Erfindung wird ein Fortbewegungsmittel vorgeschlagen, welches ein PKW, ein Transporter, ein LKW, ein Motorrad, ein Luft- und/oder Wasserfahrzeug sein kann.

Das Fortbewegungsmittel umfasst eine Anwenderschnittstelle gemäß dem zweitgenannten Erfindungsaspekt. Die Merkmale, Merkmalskombinationen und die sich aus diesen ergebenden Vorteile entsprechen denjenigen, welche in Verbindung mit dem erst- und zweitgenannten Erfindungsaspekt ausgeführt worden sind, sodass zur Vermeidung von Wiederholungen auf die obigen Ausführungen verwiesen wird.

Die Gesten zur Definition der ersten Position können grundsätzlich beliebig gewählt werden. Beispielsweise kann eine Tippgeste auf die erste Position ein sprunghaftes Anpassen der nächstliegenden Bereichsgrenze auf die erste Position ermöglichen. Alternativ kann (insbesondere im Falle eines zugeordneten Anfassers) eine Wischgeste bezüglich des Anfassers ausgeführt werden, sodass die Anwendereingabe die Wischgeste ist und die erste Position als Zielposition der Wischgeste definiert und ausgewertet wird. Selbstverständlich können mehrere Bereichsgrenzen des Luftstromes zeitgleich angepasst werden, indem beispielsweise zwei jeweilige Tippgesten auf einer berührungsempfindlichen Anzeigeeinheit zeitgleich ausgeführt und aufgelöst werden. Entsprechendes gilt für Bereichsgrenzen, welche einen jeweiligen Anfasser aufweisen. Grundsätzlich können auch unabhängig von gegebenenfalls dargestellten Anfassern ausgeführte "Finger-zueinander-Gesten" (Pinch-Gesten) und/oder "Finger-auseinander-Gesten" (Spread-Gesten) bezüglich des dargestellten Luftstroms ausgeführt werden, wobei jeweils die Positionen der verwendeten Finger gegen Ende der jeweiligen Geste die neuen Bereichsgrenzen definieren.

Selbstverständlich kann durch eine einzige Anwendereingabe bezüglich der ersten Position auf der Anzeigeeinheit eine neue Bereichsgrenze und zeitgleich eine neue Lüfterstufe definiert werden. Hierbei kann die Bereichsgrenze auf eine durch die erste Position verlaufende neue Bereichsgrenze angepasst werden, während ein Abstand zwischen der ersten Position und dem versinnbildlichten Ursprung des Luftstromes über die angepasste Lüfterstufe entscheidet. Auch könnte ein entsprechender Anfasser beiden Funktionen zugeordnet sein.

Sofern der Luftstrom als Kreisringsegment oder kuchenstückförmige Fläche veranschaulicht wird, kann der jeweilige Anfasser an den Ecken des die Schenkel verbindenden Kreisbogens angeordnet sein. Sofern separate Anfasser für die Bereichsgrenzen und die Lüfterstufe vorgesehen sind, kann der Anfasser für die Lüfterstufe bevorzugt mittig im Kreisbogen angeordnet sein. Entsprechendes gilt für die Schenkel des kuchenstückförmigen Luftstroms und die Positionen der Anfasser auf den Schenkeln.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein Ausführungsbeispiel eines erfindungsgemäßen Fortbewegungsmittels mit einem Ausführungsbeispiel einer erfindungsgemäßen Anwenderschnittstelle;
- Figur 2: ein Ausführungsbeispiel eines tragbaren Anwenderendgerätes zur Drahtloskommunikation, welches zur Verwendung in einem erfindungsgemäßen Verfahren Verwendung finden kann;
- Figur 3: eine beispielhafte Darstellung einer grafischen Benutzeroberfläche eines ersten Ausführungsbeispiels einer erfindungsgemäßen Anwenderschnittstelle;
- Figur 4: eine beispielhafte Darstellung einer grafischen Benutzeroberfläche eines zweiten Ausführungsbeispiels einer erfindungsgemäßen Anwenderschnittstelle; und
- Figur 5: ein Flussdiagramm veranschaulichend Schritte eines Ausführungsbeispiels eines erfindungsgemäßen Verfahrens zur Bedienung einer Heizklimaanlage eines Fortbewegungsmittels.

### Ausführungsformen der Erfindung

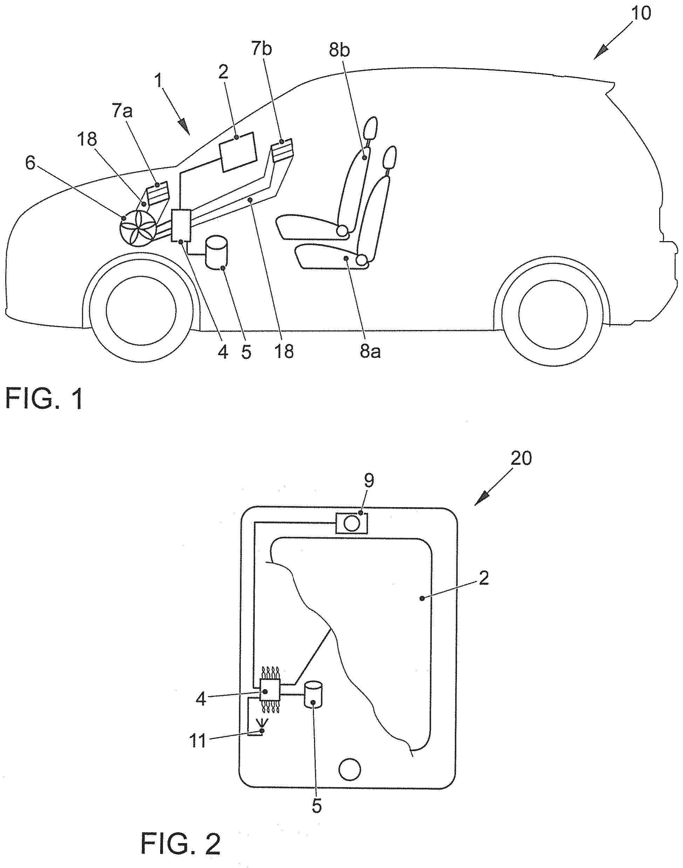

Figur 1 zeigt einen PKW 10 als Fortbewegungsmittel, in welchem eine Anwenderschnittstelle 1 mit einem Touchscreen 2 als berührungsempfindliche Anzeigeeinheit informationstechnisch mit einem elektronischen Steuergerät 4 als Auswerteeinheit verbunden ist.

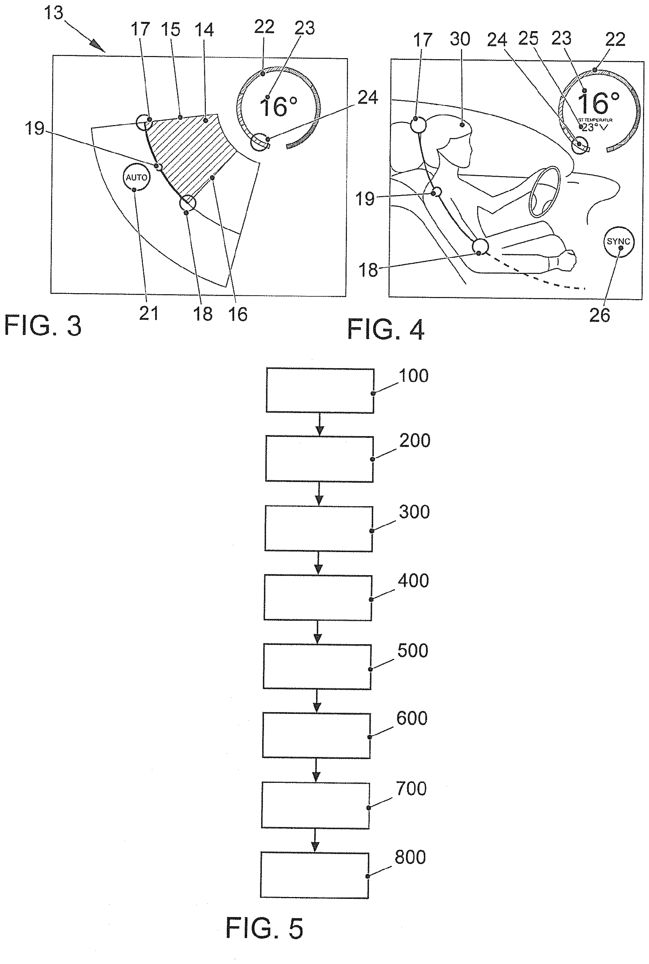

Ein Datenspeicher 5 ist eingerichtet, die Instruktionen zur Repräsentation der Schritte eines erfindungsgemäßen Verfahrens sowie Referenzen für Anwendergesten für das elektronische Steuergerät 4 bereitzuhalten. Luftausströmer 7a, 7b werden über Luftkanäle 18 von einem Lüfter 6 mit in vordefinierter Weise wärmebehandelter Luft versorgt, um auf einem Fahrersitz 8a beziehungsweise einem Beifahrersitz 8b sitzende Insassen mit Wärme beziehungsweise Kälte zu versorgen. Die erfindungsgemäße Bedienung des Touchscreens 2 wird in Verbindung mit den Figuren 3 bis 5 eingehend erläutert.

Figur 2 zeigt ein Tablet 20 als Ausführungsbeispiel eines tragbaren Anwenderendgerätes zur Drahtloskommunikation, welches einen Touchscreen 2 als berührungsempfindliche Anzeigeeinheit und eine optische Kamera 9 zur Auswertung von Anwendergesten aufweist. Beide sind informationstechnisch mit einem Prozessor 4 als Auswerteeinheit verbunden, welcher einerseits mit einem Datenspeicher 5 in Wirkverbindung steht, andererseits an eine Antenne 11 zur Aussendung sowie zum Empfang von Steuerbefehlen angeschlossen ist. Über die Antenne 11 können die Positionen aktueller Bereichsgrenzen von Luftströmen der Heizklimaanlage empfangen und Steuerbefehle zu deren erfindungsgemäßer Manipulation an die Heizklimaanlage beziehungsweise das Fortbewegungsmittel gesendet werden.

Figur 3 zeigt eine Darstellung einer grafischen Benutzeroberfläche 13, welche eine erfindungsgemäße Bedienung einer Heizklimaanlage unterstützt. Ein Luftstrom in Form eines Kreisringsegmentes 14 ist durch eine obere Bereichsgrenze 15 und eine unter Bereichsgrenze 16 parallel zur Strömungsrichtung angrenzender Luft begrenzt. Ein das Kreisringsegment 14 begrenzender längerer Kreisbogen ist mittig mit einem Anfasser 19 versehen, über welchen die Lüfterstufe derart eingestellt werden kann, dass eine größere Entfernung von einem Temperaturkreis 22 als versinnbildlichter Ursprung des Luftstromes für eine höhere Lüfterstufe und eine geringere Entfernung vom Temperaturkreis 22 für eine geringere Lüfterstufe steht. An den Endbereichen des längeren Kreisbogens des Kreisringsegmentes 14 sind Anfasser 17, 18 dargestellt, welche dem Anwender eine berührende Interaktion mit dem Kreisringsegment 14 zur zeitgleichen Anpassung der Positionen der Bereichsgrenzen 15, 16 sowie der Lüfterstufe anbieten.

Eine zusätzliche Schaltfläche 21 mit dem Schriftzug "AUTO" ermöglicht eine automatische Anpassung von Lüfterstufe und Ausrichtung zur Herstellung eines (nicht dargestellten) Sollwertes für die Innenraumtemperatur. Innerhalb des Temperaturkreises 22 ist ein Zahlenwert 23 zur Veranschaulichung der Ist-Temperatur dargestellt. Der Temperaturkreis 22 selbst weist einen Anfasser 24 auf, mittels dessen die Soll-Temperatur eingestellt werden kann, indem der Anfasser 24 an eine durch eine entsprechende Farbe repräsentierte Wunschtemperatur geschoben werden kann.

Figur 4 zeigt eine Stilisierung 30 eines Anwenders an einem Fahrerarbeitsplatz, wobei das in Figur 3 verwendete Kreisringsegment 14 optisch entfallen ist und lediglich der zwischen den Anfassern 17 und 18 gelegene Kreisbogen nebst des Anfassers 19 zur Anpassung der Lüfterstufe verblieben ist, um die Bereichsgrenzen des Luftstromes zu veranschaulichen, dessen Ursprung durch den Temperaturkreis 22 versinnbildlicht ist. Gegenüber der Figur 3 weist die Benutzeroberfläche 13 nach Figur 4 zusätzlich eine "Sync"-Schaltfläche 26 auf, mittels welcher die dargestellten Einstellungen auf eine korrespondierende Beifahrerposition übertragen werden können. Zusätzlich ist innerhalb des Temperaturkreises 22 eine Soll-Temperatur durch einen weiteren (kleineren) Zahlenwert 25 dargestellt.

Figur 5 zeigt Schritte eines Ausführungsbeispiels eines erfindungsgemäßen Verfahrens zur Bedienung einer Heizklimaanlage eines Fortbewegungsmittels. In Schritt 100 werden Bereichsgrenzen eines aktuell von der Heizklimaanlage ausgegebenen Luftstromes auf einer berührungsempfindlichen Anzeigeeinheit einer Anwenderschnittstelle dargestellt. Zeitgleich wird auch der Luftstrom selbst auf der Anzeigeeinheit dargestellt, indem zwischen den Bereichsgrenzen ein Feld gefüllt mit einer Farbe repräsentierend eine Soll-Temperatur für die Heizklimaanlage beziehungsweise den Innenraum des Fortbewegungsmittels angezeigt wird. In Schritt 200 werden ein erster Anfasser an einer ersten dargestellten Bereichsgrenze und ein zweiter Anfasser an einer zweiten dargestellten Bereichsgrenze dargestellt. Die beiden Bereichsgrenzen liegen einander bezüglich eines Kernbereiches des dargestellten Luftstroms gegenüber. In Schritt 300 wird eine Anwendereingabe an einer ersten Position auf der Anzeigeeinheit (innerhalb des ersten Anfassers) empfangen und im Ansprechen darauf eine dargestellte Bereichsgrenze sowie der Anfasser in Abhängigkeit der ersten Position angepasst.

In Schritt 500 wird ein Signal repräsentierend die erste Position von einem tragbaren Anwenderendgerät zur Drahtloskommunikation im Fortbewegungsmittel empfangen. Im Ansprechen darauf wird in Schritt 600 eine Führung eines Luftstroms der Heizklimaanlage im Fortbewegungsmittel in Abhängigkeit der angepassten Bereichsgrenze automatisch motorisch angepasst. In Schritt 700 wird eine Anwendereingabe an einer zweiten Position auf der Anzeigeeinheit empfangen und in Abhängigkeit der zweiten Position eine Länge eines auf der Anzeigeeinheit dargestellten Luftstroms ebenso wie eine korrespondierende Lüfterstufe verändert.

Im Ergebnis ermöglicht die vorliegende Erfindung eine intuitive Anpassung einer Luftverteilung (Oberkörper, Beine, Kopf o.ä.), einer Luftmenge (Lüfterstufe) sowie unterschiedlicher zusätzlicher Parameter einer Heiz-/Klimaanlage durch verschiedene Touch-Gesten (Ziehen, Berühren).

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Touchscreen
- 4: elektronisches Steuergerät
- 5: Datenspeicher
- 6: Lüfterrad
- 7a, 7b: Luftausströmer
- 8a: Fahrersitz
- 8b: Beifahrersitz
- 9: optische Kamera
- 10: PKW
- 11: Antenne
- 13: Benutzeroberfläche
- 14: Kreisringsegment
- 15, 16: Bereichsgrenzen
- 17, 18, 19: Anfasser
- 20: Tablet
- 21: Schaltfläche "AUTO"
- 22: Temperaturkreis
- 23: Zahlenwert ("Ist-Temperatur")
- 24: Anfasser
- 25: Zahlenwert ("Soll-Temperatur")
- 30: Darstellung des Fahrers am Fahrerarbeitsplatz
- 100 bis 800: Verfahrensschritte

## Patentansprüche

1. Verfahren zur Bedienung einer Heizklimaanlage eines Fortbewegungsmittels (10) umfassend die Schritte:
- Darstellen (100) einer ersten und einer zweiten Bereichsgrenze (15, 16) parallel zur Strömungsrichtung angrenzender Luft eines aktuell von der Heizklimaanlage ausgegebenen Luftstromes auf einer berührungsempfindlichen Anzeigeeinheit (2) einer Anwenderschnittstelle (1);
- Darstellen (200) eines ersten Anfassers (17) an der ersten dargestellten Bereichsgrenze (15) und/oder eines zweiten Anfassers (18) an der zweiten dargestellten Bereichsgrenze (16);
- Empfangen (300) einer Anwendereingabe an einer ersten Position und/oder an einer zweiten Position auf der Anzeigeeinheit und im Ansprechen darauf
- Anpassen (400) der dargestellten ersten Bereichsgrenze (15) in Abhängigkeit der ersten Position und/oder der dargestellten zweiten Bereichsgrenze (16) in Abhängigkeit der zweiten Position.

2. Verfahren nach Anspruch 1 weiter umfassend den Schritt
- Anpassen (600) einer Führung des Luftstromes in Abhängigkeit der angepassten Bereichsgrenze (15, 16).

3. Verfahren nach einem der vorstehenden Ansprüche weiter umfassend
- Empfangen (700) einer Anwendereingabe an einer zweiten Position auf der Anzeigeeinheit (2), und in Abhängigkeit der zweiten Position
- Verändern (800) einer Länge eines auf der Anzeigeeinheit (2) dargestellten Luftstromes.

4. Verfahren nach einem der vorstehenden Ansprüche weiter umfassend
- Darstellen (100) eines Luftstromes auf der Anzeigeeinheit (2), wobei
- eine Position innerhalb des Luftstromes (2) eine Farbe repräsentierend eine Soll-Temperatur für die Heizklimaanlage erhält und/oder
- eine Position außerhalb des Luftstromes eine Farbe repräsentierend eine Ist-Temperatur für die Heizklimaanlage erhält.

5. Verfahren nach einem der vorstehenden Ansprüche weiter umfassend
- Empfangen (500) eines Signals repräsentierend die erste Position von einem tragbaren Anwenderendgerät (20) und im Ansprechen darauf
- Anpassen (600) einer Führung eines Luftstromes der Heizklimaanlage im Fortbewegungsmittel (10) in Abhängigkeit der angepassten Bereichsgrenze (15, 16).

6. Anwenderschnittstelle zur Bedienung einer Funktion einer Heizklimaanlage eines Fortbewegungsmittels (10) umfassend
- eine berührungsempfindliche Anzeigeeinheit (2) und
- eine Auswerteeinheit (4), wobei
- die berührungsempfindliche Anzeigeeinheit (2) eingerichtet ist,
- eine erste und eine zweite Bereichsgrenze (15, 16) parallel zur Strömungsrichtung angrenzender Luft eines aktuell von der Heizklimaanlage ausgegebenen Luftstromes darzustellen,
- einen ersten Anfasser (17) an der ersten dargestellten Bereichsgrenze (15) und/oder einen zweiten Anfasser (18) an der zweiten dargestellten Bereichsgrenze (16) darzustellen,
- eine Anwendereingabe an einer ersten Position und/oder an einer zweiten Position auf der Anzeigeeinheit (2) zu empfangen und
- eine dargestellte erste Bereichsgrenze (15) in Abhängigkeit der ersten Position und/oder eine dargestellte zweite Bereichsgrenze (16) in Abhängigkeit der zweiten Position anzupassen.

7. Anwenderschnittstelle nach Anspruch 6, welche weiter eingerichtet ist, ein Verfahren nach einem der vorstehenden Ansprüche 1 bis 5 durchzuführen.

8. Fortbewegungsmittel umfassend eine Anwenderschnittstelle (1) nach einem der vorstehenden Ansprüche 6 oder 7.

## Claims

1. Method for operating a heating and air-conditioning system of a transportation means (10), comprising the steps of:
- displaying (100) on a touch-sensitive display unit (2) of a user interface (1) a first and a second region limit (15, 16) parallel to the flow direction of adjacent air of an air stream currently being discharged by the heating and air-conditioning system;
- displaying (200) a first drag point (17) at the first displayed region limit (15) and/or a second drag point (18) at the second displayed region limit (16) ;
- receiving (300) a user input at a first position and/or at a second position on the display unit, and, in response thereto,
- adapting (400) the displayed first region limit (15) in dependence on the first position and/or the displayed second region limit (16) in dependence on the second position.

2. Method according to Claim 1, further comprising the step of
- adapting (600) a guidance of the air stream in dependence on the adapted region limit (15, 16).

3. Method according to either of the preceding claims, further comprising
- receiving (700) a user input at a second position on the display unit (2), and, in dependence on the second position,
- changing (800) a length of an air stream displayed on the display unit (2).

4. Method according to one of the preceding claims, further comprising
- displaying (100) an air stream on the display unit (2), wherein
- a position inside the air stream (2) acquires a colour representing a target temperature for the heating and air-conditioning system, and/or
- a position outside the air stream acquires a colour representing an actual temperature for the heating and air-conditioning system.

5. Method according to one of the preceding claims, further comprising
- receiving (500) from a portable user terminal (20) a signal representing the first position, and, in response thereto,
- adapting (600) a guidance of an air stream of the heating and air-conditioning system in the transportation means (10) in dependence on the adapted region limit (15, 16).

6. User interface for operating a function of a heating and air-conditioning system of a transportation means (10), comprising
- a touch-sensitive display unit (2) and
- an evaluation unit (4), wherein
- the touch-sensitive display unit (2) is configured
- to display a first and a second region limit (15, 16) parallel to the flow direction of adjacent air of an air stream currently being discharged by the heating and air-conditioning system,
- to display a first drag point (17) at the first displayed region limit (15) and/or a second drag point (18) at the second displayed region limit (16),
- to receive a user input at a first position and/or at a second position on the display unit (2), and
- to adapt a displayed first region limit (15) in dependence on the first position and/or a displayed second region limit (16) in dependence on the second position.

7. User interface according to Claim 6, which is further configured to carry out a method according to one of the preceding Claims 1 to 5.

8. Transportation means comprising a user interface (1) according to either of the preceding Claims 6 and 7 .

## Revendications

1. Procédé pour faire fonctionner un système de climatisation chauffant d'un moyen de locomotion (10) comprenant les étapes consistant à :
- représenter (100) sur une unité d'affichage tactile (2) d'une interface utilisateur (1) des première et deuxième limites de plage (15, 16) parallèlement à la direction d'écoulement de l'air adjacent d'un flux d'air actuellement délivré par le système de climatisation chauffant ;
- représenter (200) une première poignée (17) sur la première limite de plage représentée (15) et/ou une deuxième poignée (18) sur la deuxième limite de plage représentée (16) ;
- recevoir (300) une entrée d'utilisateur à une première position et/ou à une deuxième position sur l'unité d'affichage et, en réponse à celle-ci,
- ajuster (400) la première limite de plage affichée (15) en fonction de la première position et/ou la deuxième limite de plage affichée (16) en fonction de la deuxième position.

2. Procédé selon la revendication 1, comprenant en outre l'étape consistant à
- ajuster (600) un guidage du flux d'air en fonction de la limite de plage ajustée (15, 16).

3. Procédé selon l'une des revendications précédentes, consistant en outre à
- recevoir (700) une entrée d'utilisateur à une deuxième position sur l'unité d'affichage (2), et en fonction de la deuxième position,
- modifier (800) une longueur d'un flux d'air représenté sur l'unité d'affichage (2).

4. Procédé selon l'une des revendications précédentes, consistant en outre à
- représenter (100) un flux d'air sur l'unité d'affichage (2), dans lequel
- une position située à l'intérieur du flux d'air (2) est associée à une couleur représentant une température de consigne pour le système de climatisation chauffant et/ou
- une position située à l'extérieur du flux d'air est associée à une couleur représentant une température réelle pour le système de climatisation chauffant.

5. Procédé selon l'une des revendications précédentes, consistant en outre à
- recevoir (500) un signal représentant la première position en provenance d'un appareil d'utilisateur portable (20) et, en réponse à celui-ci,
- ajuster (600) un guidage d'un flux d'air du système de climatisation chauffant dans le moyen de locomotion (10) en fonction de la limite de plage ajustée (15, 16).

6. Interface utilisateur pour commander une fonction d'un système de climatisation chauffant d'un moyen de locomotion (10), comprenant
- une unité d'affichage tactile (2), et
- une unité d'évaluation (4), dans lequel
- l'unité d'affichage tactile (2) est conçue pour
- représenter des première et deuxième limites de plage (15, 16) parallèlement à la direction d'écoulement de l'air adjacent d'un flux d'air qui est actuellement délivré par le système de climatisation chauffant,
- représenter une première poignée (17) sur la première limite de plage représentée (15) et/ou une deuxième poignée (18) sur la deuxième limite de plage représentée (16),
- recevoir une entrée d'utilisateur à une première position et/ou à une deuxième position sur l'unité d'affichage (2), et
- régler une première limite de plage représentée (15) en fonction de la première position et/ou une deuxième limite de plage représentée (16) en fonction de la deuxième position.

7. Interface utilisateur selon la revendication 6, qui est en outre configurée pour mettre en oeuvre un procédé selon l'une quelconque des revendications 1 à 5 ci-dessus.

8. Moyen de locomotion comprenant une interface utilisateur (1) selon l'une quelconque des revendications précédentes 6 ou 7.
